# FASCICULE DE BREVET EUROPEEN

(11) **EP 1 639 267 B1**
(45) Date de publication et mention de la délivrance du brevet: **09.05.2007**
(21) Numéro de dépôt: 04767254.8
(22) Date de dépôt: 04.06.2004
(51) Int. Cl.: F16D 41/08, F16D 41/07, F16D 41/06

(54) **DISPOSITIF DE ROUE LIBRE**
VORRICHTUNG UND FREILAUFGEHÄUSE
DEVICE AND FREE WHEEL HOUSING

(30) Priorité: 30.06.2003 FR 0307890
(43) Date de publication de la demande: 29.03.2006
(73) Titulaire: SKF FRANCE, 78180 Montigny-le-Bretonneux (FR)
(72) Inventeur: HEDMAN, Torbjörn, 37540 Saint-Cyr-Sur-Loire (FR); PONSON, Frédéric, 37230 Luynes (FR); HAMADA, Virginie, 37000 Tours (FR); LESCORAIL, Romuald, 37100 Tours (FR)
(74) Mandataire: Casalonga, Axel
(86) Numéro de dépôt international: PCT/FR2004/001386
(87) Numéro de publication internationale: WO 2005/010393

(56) Documents cités:
- US-A- 2 576 337
- US-A- 2 683 509
- US-A- 4 018 318
- US-A- 4 882 941
- US-A- 5 038 903
- US-A- 6 138 803

## Description

La présente invention concerne le domaine des dispositifs de roue libre et des cages pour dispositifs de roue libre.

Les dispositifs de roue libre comprennent généralement une bague extérieure munie d'un chemin de glissement intérieur cylindrique pour les cames de la roue libre, une bague intérieure ou un arbre muni d'un chemin de glissement extérieur cylindrique pour lesdites cames de la roue libre, et une roue libre située entre le chemin de glissement de la bague extérieure et le chemin de glissement de la bague intérieure ou de l'arbre.

La roue libre comprend une cage simple, ou une cage double constituée de deux cages concentriques, munies de fenêtres dans lesquelles sont disposées des cames assurant, par coincement ou par glissement entre les deux chemins de glissement, un accouplement unidirectionnel entre les bagues extérieure et intérieure.

La roue libre est ainsi capable de transmettre dans un sens un couple entre les bagues extérieure et intérieure et dans l'autre sens de laisser une rotation libre.

Pour rendre plus rapide le basculement des cames dans le sens du coincement, on peut prévoir un ressort se présentant sous la forme d'une bande exerçant sur chaque came un couple de rappel tendant à maintenir en permanence les cames en contact avec les chemins de glissement.

Un des problèmes à résoudre, plus particulièrement lorsque la roue libre est montée dans un système dans lequel ladite roue libre fonctionne pratiquement tout le temps en roue libre et exceptionnellement en prise de couple, est de réduire l'usure des cames qui frottent en quasi-permanence au moins sur l'une des pistes.

Le document FR 1 193 442 propose de disposer des clips élastiques sur l'une des cages de la roue libre. Lesdits clips viennent frotter sur la piste tournante afin de créer un couple de friction tendant à provoquer un décalage angulaire entre les deux cages, favorisant un basculement des cames dans une position où leur usure par friction est réduite grâce à la diminution de la pression de contact entre les cames et la bague tournante.

Un tel dispositif présente toutefois plusieurs inconvénients. Les clips métalliques tendent à compliquer l'opération de montage de la roue libre entre les bagues. La faible surface de contact des clips ne permet pas d'avoir un couple de traînée important et les cames restent en contact de friction avec la piste tournante, même si la pression de contact est un peu réduite. Le centrage de la cage supportant les clips est imparfait. L'usure entre les clips et la bague tournante est relativement rapide.

La présente invention vise à remédier aux inconvénients évoqués ci-dessus.

La présente invention vise à proposer une roue libre de montage facile, et dont l'usure mutuelle des cames et des chemins de glissement est extrêmement réduite.

Le dispositif de roue libre, selon un aspect de l'invention, est du type comprenant une pluralité d'éléments de coincement, et deux cages de maintien desdits éléments de coincement.

Le dispositif comprend un élément annulaire de friction au contact avec une cage et capable d'entrer en contact avec un chemin de glissement. L'autre cage comprend un clip pour former un élément destiné à venir en contact de friction avec l'autre chemin de glissement. L'élément annulaire, de par sa forme, tend à favoriser un excellent centrage de la cage avec laquelle il est en contact et offre une surface de frottement importante dont un couple de traînée qui peut atteindre des valeurs élevées si on le souhaite tout en conservant une usure extrêmement faible. L'élément annulaire de friction peut donc avoir une durée de fonctionnement au moins égale à celle des autres éléments de la roue libre.

Les cages sont concentriques et peuvent être réalisée en des matériaux identiques ou différents, par exemple en métal ou en matière synthétique.

Le document US 2 576 337 décrit un embrayage à roue libre à cames pourvu d'une cage intérieure équipée par des bandes de friction métalliques en contact avec la bague intérieure, et d'une cage extérieure en forme d'anneau ouvert en légère engagement de friction avec la bague extérieure. L'engagement de friction peut difficilement être déterminé avec précision d'où un risque de dispersion lors de la fabrication et une usure relativement rapide de certaines roues libres.

L'élément de ladite autre cage destiné à venir en contact de friction avec l'autre chemin de glissement, est intégré à ladite autre cage, ou rapporté et fixé sur ladite autre cage. Ledit élément peut se présenter sous la forme de portions de la cage ou de languettes élastiquement déformables issues de la cage, ou de clips élastiques rapportés.

L'élément annulaire de friction peut être prévu avec une surface de friction cylindrique de révolution.

Dans un mode de réalisation de l'invention, l'élément annulaire de friction est fixé sur ladite cage.

Dans un autre mode de réalisation de l'invention, l'élément annulaire de friction est solidaire de ladite surface de révolution.

Dans un mode de réalisation de l'invention, le dispositif comprend une bague à laquelle ladite surface de révolution appartient. L'élément annulaire de friction peut être disposé dans une rainure de ladite bague.

Dans un autre mode de réalisation de l'invention, l'élément annulaire de friction est disposé dans une rainure de ladite cage.

Selon différents modes de réalisation de l'invention, l'élément annulaire de friction présente une section transversale sensiblement rectangulaire, sensiblement en forme de T, ou encore une forme toroïdale.

Dans un mode de réalisation de l'invention, l'élément annulaire de friction comprend une zone élastique radialement. La zone élastique radialement permet un ajustement radial entre la cage et la surface de révolution et permet également un rattrapage de l'usure de l'élément annulaire de friction. On parvient ainsi à augmenter la durée de vie de la roue libre.

Dans un mode de réalisation de l'invention, l'élément annulaire de friction comprend un corps prévu pour être solidaire d'une desdites cages ou de la surface de révolution et d'entrer en contact de friction avec respectivement la surface de révolution ou une desdites cages, et un anneau de maintien du corps en contact de friction.

Dans un mode de réalisation de l'invention, la surface de révolution est axiale. On peut également prévoir une surface de révolution radiale.

Avantageusement, la roue libre comprend deux éléments annulaires de friction disposés axialement d'un côté et de l'autre des éléments de coincement.

La roue libre peut comprendre en plus un ressort se présentant sous la forme d'une bande, solidaire d'une cage.

Alternativement, la roue libre peut comprendre une seule cage et un ressort en bande. Selon l'invention le dispositif comprend un clip. Les clips permettent de favoriser la solidarisation en rotation de la roue libre avec la bague opposée aux éléments de friction et donc de favoriser la perte de contact des cames et de la bague sur laquelle frottent les éléments de friction.

La présente invention sera mieux comprise à l'étude de la description détaillée de quelques modes de réalisation pris à titre d'exemple nullement limitatifs et illustrés par les dessins annexés, sur lesquels :
- la figure 1 est une demi-vue en coupe axiale d'un dispositif de roue libre selon un aspect de l'invention ;
- la figure 2 est une demi-vue en coupe radiale du dispositif de roue libre de la figure 1 ;
- la figure 3 est une vue de détail de la figure 1;
- la figure 4 est une vue en coupe selon IV-IV de la figure 2;
- les figures 5 et 6 sont des vues de détail de la figure 2, montrant respectivement un élément de coincement en position de prise de couple et un élément de coincement en position de roue libre ;
- les figures 7 à 11 sont des vues correspondant à la figure 3 d'un dispositif de roue libre selon d'autres modes de réalisation de l'invention; et
- la figure 12 est une vue correspondant à la figure 5 d'un dispositif de roue libre selon un autre mode de réalisation de l'invention.

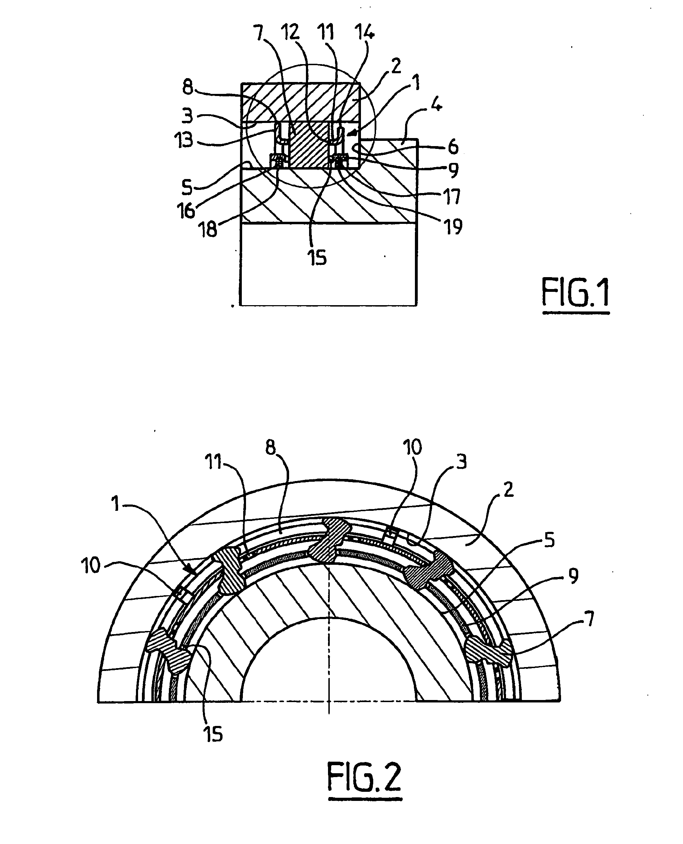

Comme on peut le voir sur les figures 1 à 6, le dispositif de roue libre 1 est disposé entre une bague extérieure 2 pourvue sur son alésage d'un chemin 3 et une bague intérieure 4 pourvue sur sa surface cylindrique extérieure d'un chemin 5 et d'un épaulement radial 6.

La roue libre 1 comprend une rangée de cames 7 maintenues ' par une cage extérieure 8, une cage intérieure 9 et des clips 10. Les cages 8 et 9 sont de forme générale annulaire et peuvent être réalisées l'une et/ou l'autre en métal ou en matière synthétique tel que du polyamide. La cage 8 comprend une partie axiale 11 dans laquelle sont formés des fenêtres 12 et deux bords radiaux 13 et 14, le bord 13 venant à proximité de la piste 3, tandis que le bord 14 est légèrement plus court et reste donc à distance de ladite piste 3. La cage 8 présente donc en section axiale une forme de U. Les clips 10 sont fixés sur la cage 8.

La cage 9, dans le mode de réalisation illustré ici, consiste en une simple portion axiale cylindrique dans laquelle sont formées des fenêtres 15. Les fenêtres 15 sont formées au centre de la portion axiale et sont délimitées par deux portions latérales 9a, 9b annulaires et des barrettes axiales 9c rectangulaires reliant les portions latérales. Les cames 7 sont montées et régulièrement réparties dans les fenêtres 12 de la cage 8 et les fenêtres 15 de la cage 9.

La cage 9 comprend en outre deux rainures annulaires 16 et 17, disposées d'un côté et de l'autre des fenêtres 15 et formées sur l'alésage de la cage 9, face à la piste 5 de la bague intérieure 4.

Les clips 10 sont ici au nombre de quatre, circonférentiellement régulièrement espacés. Toutefois, le nombre de clips et l'élasticité des clips peuvent être choisis en fonction de l'effet de friction recherché sur la piste 3. Les clips 10 sont réalisés à partir d'une bande de tôle d'acier découpée et pliée. Les clips 10 présentent une forme générale de U avec un fond axial 10a sensiblement plat, deux branches radiales 10b, et deux portions obliques de liaison 10c entre les branches radiales 10b et le fond axial 10a. L'extrémité libre des branches radiales 10b est disposée dans deux dégagements 11a formées dans la partie axiale 11 à proximité des bords radiaux 13 et 14 de la cage 8. Le fond axial 10a est en contact de frottement sur la piste 3 de la bague extérieure 2. Ce frottement aide la roue libre 1 à rester angulairement solidaire de la bague extérieure 2, lorsque les cames 7 sont en position dégagée dite de roue libre, et favorise le décalage angulaire entre les cages 8 et 9 qui provoque l'éloignement radial des cames 7 par rapport à la piste 5 de la bague intérieure 4.

La roue libre 1 comprend deux éléments de friction annulaires 18 et 19, fixés à la cage 9 par montage dans les rainures 16 et 17 et en saillie vers l'intérieur en venant en contact de friction avec la piste 5 de la bague intérieure 4. Généralement, les cages 8 et 9 sont réalisées en acier. Les éléments annulaires de friction 18 et 19 peuvent avantageusement être réalisés en matériau synthétique, par exemple à base d'élastomère, ou de matière plastique, les éléments de friction pouvant être fabriqués séparément et fixés sur la cage 9 par des moyens appropriés ou bien être surmoulés directement sur la cage 9.

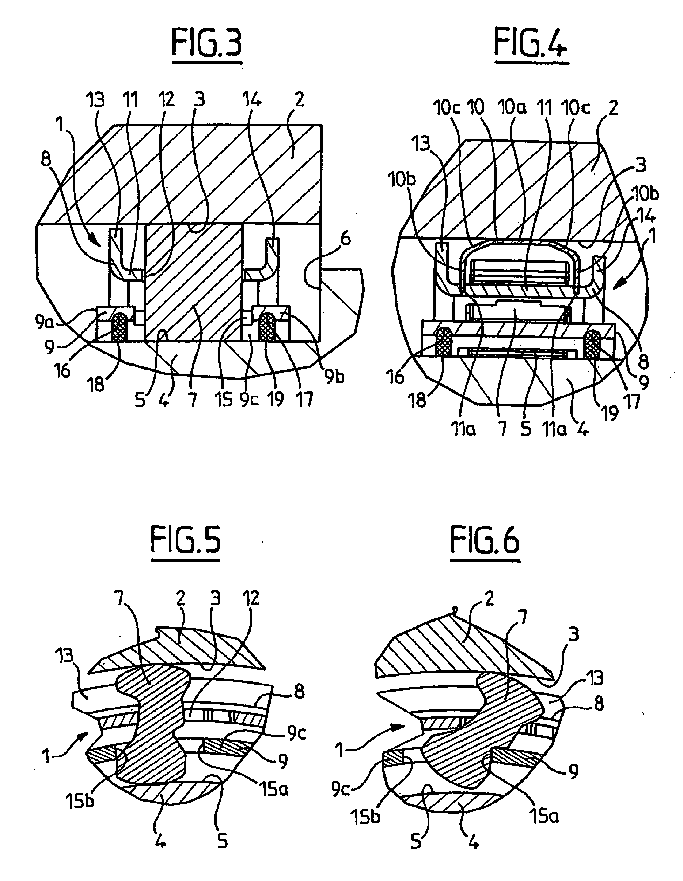

Le mode de fonctionnement de la roue libre 1 est le suivant. Lorsque l'élément de coincement ou came 7 est en position de prise de couple, voir figure 4, le fonctionnement est analogue à celui d'une roue libre classique. La cage intérieure 9 et la bague intérieure 4 n'ont aucun mouvement de rotation relatif l'une par rapport à l'autre. A ce stade, les éléments annulaires de friction 18 et 19 n'ont donc pas d'action particulière.

En position de roue libre, comme illustré sur la figure 6, la came 7 reste, en général, en contact avec la piste 3 de la bague extérieure 2. Les clips 10 sont en contact de friction avec la piste 3 de la bague extérieure 2 et tendent à rester solidaires en rotation de la bague extérieure 2. La bague extérieure 2 tourne dans le sens horaire par rapport à la bague intérieure 4 et tend à entraîner dans le même sens et à la même vitesse la roue libre 1, notamment les éléments annulaires de friction 18 et 19, les cames 7 et les cages 8 et 9. Le couple de frottement entre la piste 5 de la bague intérieure 4 et les éléments annulaires de friction 18 et 19 qui sont solidaires de la cage intérieure 9, tend à freiner la cage intérieure 9 par rapport à la cage extérieure 8. En d'autres termes la cage extérieure 8 prend de l'avance sur la cage intérieure 9 dans le sens horaire en se décalant angulairement.

Le bord 15a de la fenêtre 15 formé par la barrette 9c de la cage intérieure 9 vient appuyer sur l'élément de coincement 7 en tendant à le soulever par rapport à la piste 5. On parvient ainsi à ce que l'élément de coincement 7 perde le contact avec la piste 5 et à supprimer dans une très grande mesure l'usure des éléments de coincement 7 et de la piste 5 en position de roue libre. On remarquera que, dans la position de prise de couple illustrée sur la figure 4, le rebord 15a de la fenêtre 15 de la cage intérieure 9 est distant de l'élément de coincement 7 qui vient au contraire en contact avec le rebord 15b circonférentiellement opposé au rebord 15a.

Le choix d'une friction faible des éléments annulaires de friction 18 et 19 sur la bague intérieure 4 par rapport à la friction des clips 10 sur la piste 3 a pour conséquence l'entraînement en rotation des cames 7, des cages 8 et 9, des clips 10 et des éléments annulaires de friction 18 et 19, par la bague extérieure 2, à la fois par friction des cames 7 sur la bague extérieure 2 et par effet centrifuge. Les cames 7 sont alors en position distante de la piste 5. Les éléments annulaires de friction 18 et 19 sont alors les seuls éléments de la roue libre en contact avec la bague intérieure 4.

Les cames 7 sont alors en contact avec la piste extérieure 3 mais sans glisser par rapport à celle-ci, et lesdites cames ont un mouvement relatif par rapport à la piste intérieure 5 mais sans contact avec cette dernière. On élimine ainsi en fonctionnement en roue libre l'usure des cames par glissement relatif sur les pistes.

Bien entendu, on peut parfaitement prévoir une bague intérieure tournante et une bague extérieure non tournante.

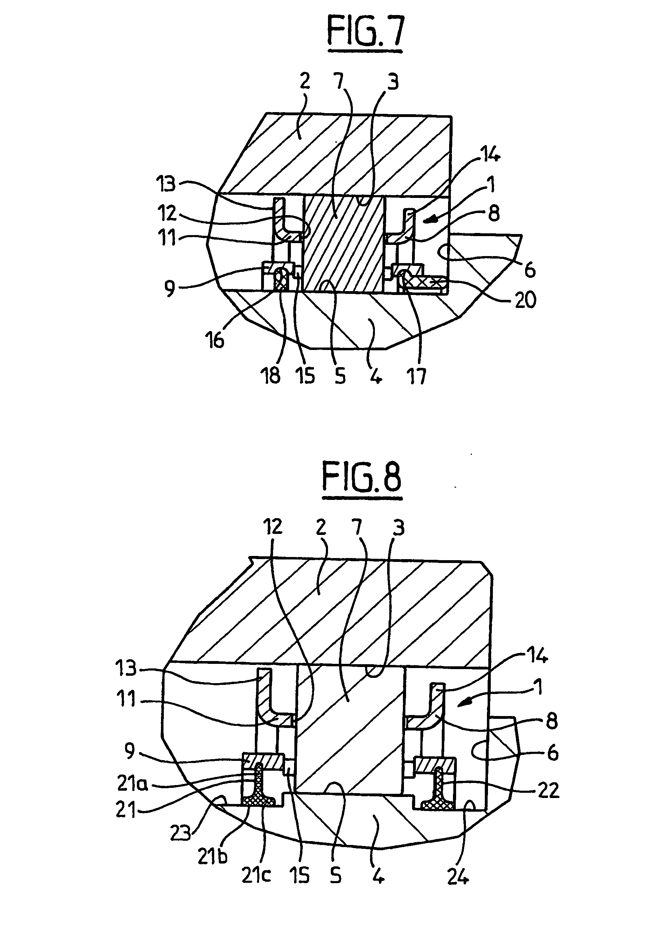

Dans le mode. de réalisation illustré sur la figure 7, l'élément annulaire de friction 19 est remplacé par un élément annulaire de friction 20 monté dans la rainure 17 de la cage intérieure 9 et s'étendant en saillie axialement à l'opposé des éléments roulants jusqu'à venir en contact avec le redan radial 6 de la bague intérieure 4. La roue libre 1 comprend donc deux éléments annulaires de friction 18 et 20 fixés à la cage intérieure 9. et en contact de friction, l'un avec une surface axiale formée par la piste 5, et l'autre avec une surface radiale formée par le redan 6.

Dans le mode de réalisation illustré sur la figure 8, les éléments annulaires de friction 21 et 22 sont montés dans les rainures 16 et 17 et sont de forme identique. Les éléments annulaires de friction 21 et 22 présentent une section transversale en T. La surface extérieure de la bague intérieure 4 est étagée avec la piste 5 présentant un diamètre légèrement plus grand que les surfaces cylindriques voisines 23 et 24. La piste 5 est de longueur axiale correspondant sensiblement à la longueur axiale des fenêtres 15 de la cage intérieure 9.

Dans ce qui suit, seul l'élément annulaire de friction 21 sera décrit. L'élément annulaire de friction 21 comprend une portion radiale 21a dont l'extrémité de grand diamètre est fixée dans la rainure 16 et dont l'extrémité de petit diamètre rejoint la portion axiale 21b. La portion axiale 21b s'étend axialement d'un côté et de l'autre de la portion 21a et présente un alésage 21c en contact de frottement avec la surface cylindrique extérieure 23 de la bague intérieure 4. On dispose ainsi d'un élément annulaire de friction offrant une surface de frottement importante, d'où un couple de frottement qui peut être important si on le désire tout en restant de faible volume et donc de faible masse.

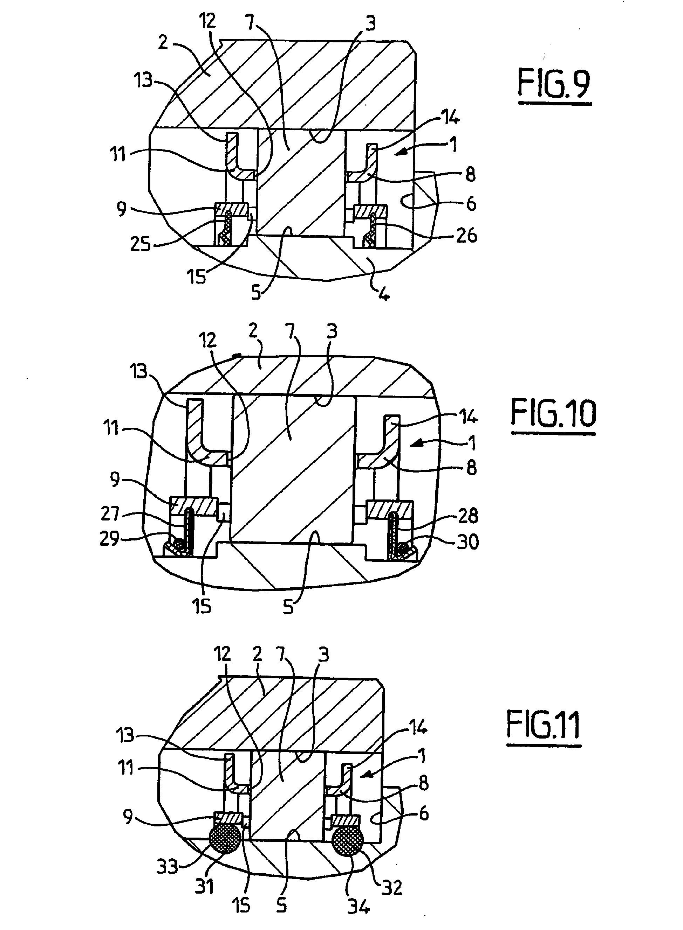

Le mode de réalisation illustré sur la figure 9 se distingue du mode de réalisation illustré sur la figure 8 en ce que les éléments annulaires de friction 25 et 26 présentent une zone de zigzag, en d'autres termes de ligne brisée à angles alternativement rentrants et saillants, offrant une grande élasticité radiale et permettant un rattrapage de l'usure au cours du fonctionnement de la roue libre 1.

Dans le mode de réalisation illustré sur la figure 10, les éléments annulaires de friction 27 et 28 comprennent un corps 27a, 28a présentant une forme générale de L en section axiale avec une portion radiale dont l'extrémité de grand diamètre est fixée dans la rainure 16, 17 de la cage intérieure 9, et une portion axiale ou oblique issue de l'extrémité de petit diamètre de la portion radiale et en contact avec la surface cylindrique extérieure 23, 24 de la bague intérieure 4. L'élément annulaire de friction 27, 28 se complète par un anneau de maintien élastique 29, 30 monté sur la surface extérieure de la portion axiale ou oblique pour maintenir le contact avec la surface cylindrique extérieure 23, 24 de la bague intérieure 4.

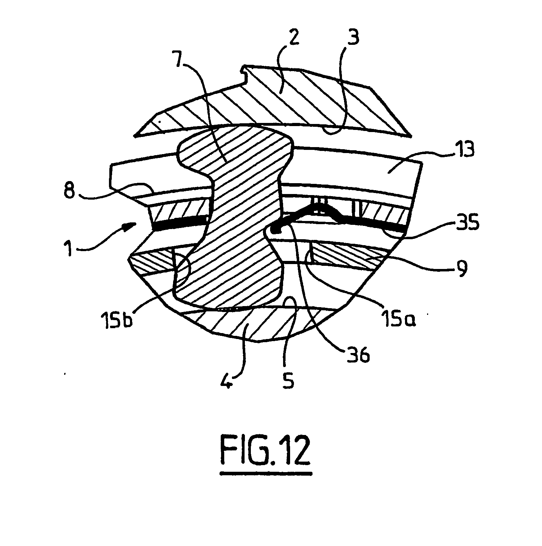

Dans le mode de réalisation illustré sur la figure 11, la cage intérieure 9 est dépourvue de rainure annulaire. Les éléments annulaires de friction se présentent sous la forme de tores 31, 32, en contact de friction avec l'alésage des portions annulaires 9a, 9b de la cage intérieure 9, et montés dans des rainures 33, 34 annulaires formées de part et d'autre de la piste 5 de la bague intérieure 4. Les éléments annulaires de friction 31, 32 sont donc, en fonctionnement normal permanent, solidaires de la bague intérieure 4 et frottent sur l'alésage de la cage intérieure 9. Le couple de friction se produit alors entre la cage intérieure 9 et les éléments annulaires de friction 31 et 32. Ce dernier mode de réalisation assure en outre un maintien axial de la roue libre et un amortissement des vibrations. L'élément annulaire de friction 31, 32, sous la forme d'un simple tore, est particulièrement économique.

Le mode de réalisation illustre sur la figure 12 se rapproche de celui illustré sur les figures 1 à 6. La roue libre 1 comprend, en outre, un ressort 35, de forme générale annulaire, réalisé à partir d'une bande métallique, disposée entre les cages 8 et 9. Le ressort 35 comprend des languettes de rappel 36, chacune apte à agir par appui sur une came 7 pour permettre un coincement plus rapide de ladite came 7.

A titre de variante, les clips 10 peuvent être réalisés en matière synthétique.

Grâce à l'invention, on dispose d'une cage de roue libre pourvue d'un moyen de génération d'un couple de traînée avec une surface par rapport à laquelle ladite cage tourne, ce moyen de génération d'un couple de traînée étant de forme annulaire pour offrir une surface de contact qui peut être importante si on le souhaite et ayant un effet favorable au centrage de la cage. Le montage de la roue libre reste particulièrement simple et économique.

## Revendications

1. Dispositif de roue libre (1), du type comprenant une pluralité d'éléments de coincement (7) prévus pour venir en contact avec deux chemins de glissement entre lesquels lesdits éléments de coincement sont disposés, et deux cages de maintien (8, 9) desdits éléments de coincement, ledit dispositif comprenant un élément annulaire de friction (18) en contact avec une cage et capable d'entrer en contact avec un chemin de glissement, **caractérisé par le fait que** l'autre cage comprend un élément destiné à venir en contact de friction avec l'autre chemin de glissement.

2. Dispositif selon la revendication 1, **caractérisé par le fait que** l'élément annulaire de friction (18) est fixé sur ladite cage (9).

3. Dispositif selon la revendication 1, **caractérisé par le fait que** l'élément annulaire de friction (18) est solidaire dudit chemin de glissement.

4. Dispositif selon l' une quelconque des revendications précédentes, **caractérisé par le fait qu'**il comprend une bague (4) auquel ledit chemin de glissement appartient.

5. Dispositif selon la revendication 4, **caractérisé par le fait que** l'élément annulaire de friction (31) est disposé dans une rainure (33) de ladite bague (4).

6. Dispositif selon l'une quelconque des revendications 1 à 4, **caractérisé par le fait que** l'élément annulaire de friction (18) est disposé dans une rainure (16) de ladite cage (9).

7. Dispositif selon l'une quelconque des revendications précédentes, **caractérisé par le fait que** l'élément annulaire de friction (18) présente une section transversale sensiblement rectangulaire.

8. Dispositif selon l'une quelconque des revendications. 1) 6, **caractérisé par le fait que** l'élément annulaire de friction (21) présente une section transversale sensiblement en T.

9. Dispositif selon l'une quelconque des revendications 1 à 6, **caractérisé par le fait que** l'élément annulaire de friction (31) présente une forme toroïdale.

10. Dispositif selon l'une quelconque des revendications précédentes, **caractérisé par le fait que** l'élément annulaire de friction (25) comprend une zone élastique radialement.

11. Dispositif selon l'une quelconque des revendications précédentes, **caractérisé par le fait que** l'élément annulaire de friction (27) comprend un corps prévu pour être solidaire d'une desdites cages ou du chemin de glissement et capable d'entrer en contact de friction avec le chemin de glissement ou une desdites cages, et un anneau (29) de maintien du corps en contact de friction.

12. Dispositif selon l'une quelconque des revendications précédentes, **caractérisé par le fait que** le chemin de glissement comprend une surface axiale (23).

13. Dispositif selon l'une quelconque des revendications précédentes, **caractérisé par le fait que** le chemin de glissement comprend une surface radiale (6).

14. Dispositif selon l'une quelconque des revendications précédentes, **caractérisé par le fait que** l'une desdites cages étant en contact de friction avec une bague (4) par l'intermédiaire dudit élément annulaire de friction (18). un clip (10) pour former

15. Dispositif selon l'une quelconque des revendications précédentes, **caractérisé par le fait qu'**il comprend un ressort (35) solidaire d'une cage.

## Claims

1. Free wheel device (1) of the type comprising a plurality of blocking elements (7) designed to come into contact with two slideways between which the said blocking elements are placed, and two cages (8, 9) for retaining the said blocking elements, the said device comprising an annular friction element (18) in contact with one cage and capable of coming into contact with one slideway, **characterized in that** the other cage comprises a clip (10) to form an element designed to come into friction contact with the other slideway.

2. Device according to Claim 1, **characterized in that** the annular friction element (18) is attached to the said cage (9).

3. Device according to Claim 1, **characterized in that** the annular friction element (18) is fixedly attached to the said slideway.

4. Device according to any one of the preceding claims, **characterized in that** it comprises a ring (4) to which the said slideway belongs.

5. Device according to Claim 4, **characterized in that** the annular friction element (31) is placed in a groove (33) of the said ring (4).

6. Device according to any one of Claims 1 to 4, **characterized in that** the annular friction element (18) is placed in a groove (16) of the said cage (9).

7. Device according to any one of the preceding claims, **characterized in that** the annular friction element (18) has a substantially rectangular cross section.

8. Device according to any one of Claims 1 to 6, **characterized in that** the annular friction element (21) has a substantially T-shaped cross section.

9. Device according to any one of Claims 1 to 6, **characterized in that** the annular friction element (31) has a toroidal shape.

10. Device according to any one of the preceding claims, **characterized in that** the annular friction element (25) comprises a radially elastic zone.

11. Device according to any one of the preceding claims, **characterized in that** the annular friction element (27) comprises a body designed to be fixedly attached to one of the said cages or to the slideway and capable of coming into friction contact with the slideway or one of the said cages, and a hoop (29) for holding the body in friction contact.

12. Device according to any one of the preceding claims, **characterized in that** the slideway comprises an axial surface (23).

13. Device according to any one of the preceding claims, **characterized in that** the slideway comprises a radial surface (6).

14. Device according to any one of the preceding claims, **characterized in that** one of the said cages is in friction contact with a ring (4) via the said annular friction element (18).

15. Device according to any one of the preceding claims, **characterized in that** it comprises a spring (35) fixedly attached to a cage.

## Patentansprüche

1. Freilaufeinrichtung (1), umfassend eine Vielzahl von Klemmelementen (7), die dazu vorgesehen sind, mit zwei Gleitwegen in Kontakt zu kommen, zwischen denen die Klemmelemente angeordnet sind, und zwei Haltegerüste (8, 9) für die Klemmelemente, wobei die Einrichtung ein ringförmiges Reibungselement (18) umfasst, das mit einem Gerüst in Kontakt ist und mit einem Gleitweg in Kontakt treten kann, **dadurch gekennzeichnet, dass** das andere Gerüst einen Clip umfasst, um ein Element zu bilden, das dazu bestimmt ist, mit dem anderen Gleitweg in Reibungskontakt zu kommen.

2. Einrichtung nach Anspruch 1, **dadurch gekennzeichnet, dass** das ringförmige Reibungselement (18) auf dem Gerüst (9) befestigt ist.

3. Einrichtung nach Anspruch 1, **dadurch gekennzeichnet, dass** das ringförmige Reibungselement (18) mit dem Gleitweg verbunden ist.

4. Einrichtung nach einem der vorhergehenden Ansprüche, **dadurch gekennzeichnet, dass** sie einen Ring (4) umfasst, dem der Gleitweg angehört.

5. Einrichtung nach Anspruch 4, **dadurch gekennzeichnet, dass** das ringförmige Reibungselement (31) in einer Nut (33) des Ringes (4) angeordnet ist.

6. Einrichtung nach einem der Ansprüche 1 bis 4, **dadurch gekennzeichnet, dass** das ringförmige Reibungselement (18) in einer Nut (16) des Gerüsts (9) angeordnet ist.

7. Einrichtung nach einem der vorhergehenden Ansprüche, **dadurch gekennzeichnet, dass** das ringförmige Reibungselement (18) einen im Wesentlichen rechteckigen Querschnitt aufweist.

8. Einrichtung nach einem der Ansprüche 1 bis 6, **dadurch gekennzeichnet, dass** das ringförmige Reibungselement (21) einen im Wesentlichen T-förmigen Querschnitt aufweist.

9. Einrichtung nach einem der Ansprüche 1 bis 6, **dadurch gekennzeichnet, dass** das ringförmige Reibungselement (31) eine toroidale Form aufweist.

10. Einrichtung nach einem der vorhergehenden Ansprüche, **dadurch gekennzeichnet, dass** das ringförmige Reibungselement (25) eine radial elastische Zone aufweist.

11. Einrichtung nach einem der vorhergehenden Ansprüche, **dadurch gekennzeichnet, dass** das ringförmige Reibungselement (27) einen Körper, der dazu vorgesehen ist, mit einem der Gerüste oder dem Gleitweg verbunden zu werden, und fähig ist, mit dem Gleitweg oder einem der Gerüste in Gleitkontakt zu treten, und einen Ring (29) zum Halten des Körpers in Reibkontakt umfasst.

12. Einrichtung nach einem der vorhergehenden Ansprüche, **dadurch gekennzeichnet, dass** der Gleitweg eine axiale Fläche (23) umfasst.

13. Einrichtung nach einem der vorhergehenden Ansprüche, **dadurch gekennzeichnet, dass** der Gleitweg eine radiale Fläche (6) umfasst.

14. Einrichtung nach einem der vorhergehenden Ansprüche, **dadurch gekennzeichnet, dass** eines der Gerüste mit einem Ring (4) durch das ringförmige Reibungselement (18) in Reibkontakt steht.

15. Einrichtung nach einem der vorhergehenden Ansprüche, **dadurch gekennzeichnet, dass** sie eine mit einem Gerüst verbundene Feder (35) umfasst.
